# EUROPEAN PATENT APPLICATION

(11) **EP 4 443 541 A1**
(43) Date of publication of application: **09.10.2024**
(21) Application number: 23843307.2
(22) Date of filing: 17.07.2023
(51) Int. Cl.: H01M 4/134, H01M 4/36, H01M 4/48, H01M 4/38, H01M 4/133, H01M 4/583, H01M 4/587, H01M 4/131, H01M 4/136, H01M 4/525

(54) **LITHIUM SECONDARY BATTERY WITH IMPROVED SAFETY**

(30) Priority: 21.07.2022 KR 20220090334
(71) Applicant: LG Energy Solution, Ltd., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/010227
(87) International publication number: WO 2024/019460

(57) **Abstract**

A negative electrode for a lithium secondary battery and a lithium secondary battery including the same, where the negative electrode i) has a high energy density by containing a silicon-based material as a negative electrode active material, and ii) having an individual mixture layer including a silicon-based material having a relatively low electrical conductivity at the outermost part of the negative electrode mixture layer of a multilayer structure, so that the amount of current may be lowered in the event of an internal short circuit and the amount of heat generation may be reduced.

## Description

### [Technical Field]

The present invention relates to a lithium secondary battery with improved safety against internal short circuits.

This application claims the benefit of priority based on Korean Patent Applications No. 10-2022-0090334, filed on July 21, 2022, the disclosure of which is incorporated herein by reference in its entirety.

### [Background Technology of the Invention]

In recent years, secondary batteries have been widely used in small devices such as portable electronics, as well as in medium and large devices such as battery packs or power storage in hybrid and electric vehicles.

Since high energy density is required to apply these secondary batteries to medium and large-scale devices, high capacity is being implemented by using ternary compounds containing nickel (Ni), cobalt (Co), and manganese (Mn), specifically LiNiₐCo_{b}Mn_{c}O₂ (0.6 < a≤0.9, a+b+c=1), which has a nickel (Ni) content of more than 60%, and lithium nickel metal oxide with a layered structure as a positive electrode active material. However, although the capacity of lithium nickel metal oxide increases as the content of nickel (Ni) increases, it exhibits low chemical and structural stability and is prone to exothermic reactions. In particular, lithium nickel metal oxide has a low heating on-set point, and once an exothermic reaction starts, the temperature inside the battery can rise rapidly, causing ignition or explosion, leading to safety degradation.

The exothermic reaction of the positive electrode active material can be induced when a short-circuit current flows inside the cell, i.e., when an internal short circuit occurs. More specifically, short-circuit currents can occur mainly when a short circuit occurs inside the secondary battery, such as through the penetration of a needle-shaped object, or when a short circuit occurs in an electronic device connected to the secondary battery. In addition, when a short circuit occurs in a lithium secondary battery, a rapid electrochemical reaction occurs at the positive electrode and negative electrode, which generates heat. This heat is conducted to the surrounding material, and the temperature of the secondary battery cell rises rapidly due to this heat conduction, eventually causing the cell to ignite. In particular, in the case of a battery pack containing a plurality of lithium secondary battery cells, the heat generated by one cell can propagate to the surrounding cells and affect the other cells, eventually causing the battery pack to ignite.

Therefore, there is a need to develop batteries that exhibit high energy density while improving safety issues due to internal short circuits.

### [Prior Art Documents]

Korean Patent Publication No. 10-2020-0024980

Korean Patent Publication No. 10-2017-0004253

### [Description of the Invention]

### [Technical Problem]

According to one aspect, the present disclosure provides for a negative electrode having a high energy density and improved safety issues due to internal short circuits, a lithium secondary battery including the negative electrode, and a secondary battery module including the negative electrode.

To address the issues described above, in one embodiment, the present invention provides a negative electrode for a lithium secondary battery, comprising a negative electrode current collector, and a first negative electrode mixture layer to a n^{th} negative electrode mixture layer (where n≥2) disposed at the negative electrode current collector, wherein the first negative electrode mixture layers to n-1^{th}negative electrode mixture layer comprises a first negative electrode active material including a carbon-based material and a second negative electrode active material including a silicon-based material, wherein the n^{th} negative electrode mixture layer comprises the second negative electrode active material including the silicon-based material.

Here, in the first negative electrode mixture layer to the n-1^{th} negative electrode mixture layer, a content or a content ratio of the second negative electrode active material may increase in respective negative electrode mixture layer of the first negative electrode mixture layer to the n-1^{th} negative electrode mixture layer positioned sequentially at the negative electrode current collector.

In addition, the carbon-based material of the first negative electrode active material may include one or more selected from a group comprising soft carbon, hard carbon, natural graphite, artificial graphite, expanded graphite, non-graphitizable carbon, carbon black, acetylene black, ketjen black, carbon nanotubes, fullerene, activated carbon, graphene, and carbon fiber.

Moreover, the silicon-based material of the negative electrode active material may include one or more selected from a group comprising silicon (Si), silicon carbide (SiC), and silicon oxide (SiO_{q}, where 0.8≤q≤2.5).

In addition, the second negative electrode active material may be included in 1 to 20 wt% with respect to a total weight of a negative electrode active material.

Furthermore, the second negative electrode active material has a sphericity of 0.5 to 1.0, and the sphericity may decrease in respective negative electrode mixture layer of the first negative electrode mixture layer to the n^{th} negative electrode mixture layer positioned sequentially at the negative electrode current collector.

In addition, a total thickness of a negative electrode mixture layer may be 50 µm to 300 µm, and here, a thickness of the n^{th} negative electrode mixture layer may be from 5% to 30% of a total thickness of a positive electrode mixture layer.

In addition, in an exemplary embodiment, the present invention provides a lithium secondary battery comprising the above-described negative electrode, a positive electrode, and a separator positioned between the negative electrode and the positive electrode.

Here, the positive electrode comprises a positive electrode current collector and a first positive electrode mixture layer to a m^{th} positive electrode mixture layer (where m≥2) disposed at the positive electrode current collector, wherein the first positive electrode mixture layer to the m^{th} positive electrode mixture layer may include a first positive electrode active material including a lithium complex metal oxide represented by Formula 1 and a second positive electrode active material including an iron phosphate compound represented by Formula 2:

[Formula 1] Liₓ[Ni_{y}Co_{z}Mn_{w}M¹ᵥ]O₂

[Formula 2] LiFeₐM²₁₋ₐXO₄

wherein, in Formula 1 and Formula 2,
M¹ is one or more elements selected from a group comprising W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, and 0≤v≤0.1, respectively, where y+z+w+v=1,
M² is one or more elements selected from a group comprising W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more selected from the group consisting of P, Si, S, As, and Sb, and
a is 0≤a≤0.5.

In addition, a content or a content ratio of the second positive electrode active material in each positive electrode mixture layer may increase in respective positive electrode mixture layer of the first positive electrode mixture layer to the m^{th} positive electrode mixture layer positioned sequentially at the positive electrode current collector.

Moreover, the second positive electrode active material may be included in less than 10 wt% with respect to a total weight of a positive electrode mixture layer.

In addition, a total thickness of a positive electrode mixture layer may be 50 µm to 300 µm.

Furthermore, in an exemplary embodiment, the present invention provides a secondary battery module including the above-described lithium secondary battery according to the present invention.

### [Advantageous Effects]

The negative electrode for a lithium secondary battery according to the present invention has the advantage of having a high energy density by containing a silicon-based material as a negative electrode active material, and having an individual mixture layer composed of a silicon-based material having a relatively low electrical conductivity at the outermost part of the negative electrode mixture layer of the multilayer structure, so that the amount of current may be lowered in the event of an internal short circuit and the amount of heat generation may be reduced, thereby improving safety issues due to an internal short circuit of the secondary battery.

### [Brief Description of the Drawings]

FIG. 1 is a cross-sectional view illustrating a structure of a negative electrode for a lithium secondary battery according to the present invention.
FIG. 2 is a cross-sectional view illustrating a structure of a lithium secondary battery having a negative electrode according to the present invention.

### [Detailed Description]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is positioned "on" another part, this includes not only a case in which one part is positioned "directly on" another part, but a case in which a third part is interposed there between. In contrast, when a part of a layer, a film, a region or a plate is positioned "under" another part, this includes not only a case in which one part is positioned "directly under" another part, but a case in which a third part is interposed there between. In addition, in this application, "on" may include not only a case of positioned on an upper part but also a case of positioned on a lower part.

Hereinafter, the present invention will be described in more detail.

### Negative Electrode for Lithium Secondary Batteries

In one embodiment, the present invention provides
a negative electrode for a lithium secondary battery, comprising:
a negative electrode current collector, and
a first negative electrode mixture layer to a n^{th} negative electrode mixture layer (where n≥2) positioned on the negative electrode current collector,
wherein the first negative electrode mixture layer to n-1^{th} negative electrode mixture layer comprises a first negative electrode active material including a carbon-based material and a second negative electrode active material including a silicon-based material,
wherein the n^{th} negative electrode mixture layer includes the second negative electrode active material including the silicon-based material.

The negative electrode for a lithium secondary battery according to the present invention includes a negative electrode mixture layer prepared by applying, drying, and pressing a slurry including a negative electrode active material on a negative electrode current collector, wherein the slurry may optionally further include a conductive material, a binder, other additives, and the like as required.

Here, the negative electrode includes a negative electrode current collector and a negative electrode mixture layer of a multilayer structure having two or more separate mixture layers laminated on the negative electrode current collector.

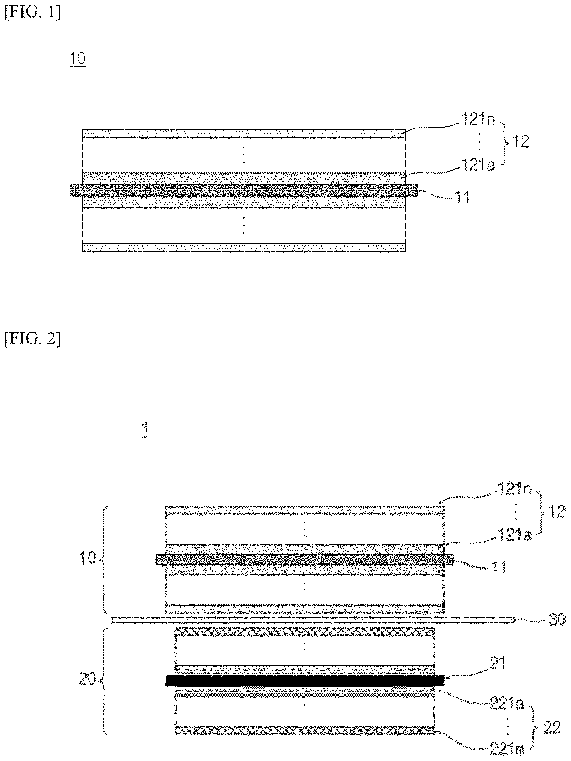

Specifically, the negative electrode mixture layer has a structure in which n (where n≥2) individual negative electrode mixture layers 121 are stacked on the negative electrode current collector 11, as shown in FIG. 1. In this case, the negative electrode mixture layer stacked on the surface contacting the negative electrode current collector 11 is the first negative electrode mixture layer 121a, and on the first negative electrode mixture layer 121a, the second negative electrode mixture layer to the n^{th}negative electrode mixture layer 121n are stacked sequentially, so that n individual negative electrode mixture layers 121 are located on the negative electrode current collector 11.

The number of layers is not particularly limited as long as the negative electrode mixture layer has a structure of two or more layers (where n≥2), but more specifically, it may be two to ten layers; two to eight layers; two to six layers; or two to four layers. By adjusting the number of layers of the negative electrode mixture layer to the above range, the present invention may easily adjust the internal composition of the negative electrode mixture layer according to the location, for example, the composition of the negative electrode mixture layer that is relatively adjacent to the positive electrode, while preventing a decrease in the manufacturing efficiency of the negative electrode.

In addition, the negative electrode mixture layer may use any negative electrode active material conventionally used in the art, but preferably includes a first negative electrode active material containing a carbon-based material and a second negative electrode active material containing a silicon-based material.

Specifically, the first negative electrode active material may include a carbon-based material having carbon (C) as its main component. Such carbon-based materials may include one or more of the following: graphite with a fully layered crystalline structure, such as natural graphite; soft carbon with a low-crystalline layered crystalline structure (graphene structure; a structure in which hexagonal honeycomb planes of carbon are arranged in layers) and hard carbon in which these structures are mixed with amorphous portions, artificial graphite, expanded graphite, hard carbon, carbon black, acetylene black, ketjen black, carbon nanotubes, fullerene, activated carbon, graphene, carbon fiber, and the like.

Moreover, the second negative electrode active material may include a silicon-based material having silicon (Si) as a main component. The silicon-based material may include one or more of silicon (Si), silicon carbide (SiC), silicon monoxide (SiO), and silicon dioxide (SiO₂). Here, the silicon-based material may be represented by silicon oxide (SiO_{q}, where 0.8<q<2.5) when silicon monoxide (SiO) and silicon dioxide (SiO₂) are uniformly mixed or compounded and included in the negative electrode mixture layer.

In addition, the entire negative electrode active material including both the first negative electrode active material and the second negative electrode active material may be included from 90 to 99 wt%, more specifically from 92 to 98 wt%; or from 95 to 99 wt%, based on a total weight of the negative electrode mixture layer.

Furthermore, the second negative electrode active material may be included from 1 to 20 wt% based on the total weight of the negative electrode active material, more specifically from 1 to 9 wt%, 3 to 7 wt%, 5 to 15 wt%, 11 to 19 wt%, or 13 to 17 wt% based on the total weight of the negative electrode active material. By adjusting the content of the second negative electrode active material to the above range, the present invention may minimize the rate of volume change of the battery based on charge and discharge, and at the same time improve the charge capacity per unit mass while reducing the lithium consumption and irreversible capacity loss during the initial charge and discharge of the battery.

Furthermore, the first negative electrode active material and the second negative electrode active material are included in all of the n-1 negative electrode mixture layers, but the content of the second negative electrode active material included in the individual negative electrode mixture layers or the ratio of the content of the second negative electrode active material with respect to the weight of the individual negative electrode mixture layers may increase as the position of the individual negative electrode mixture layers changes from the first negative electrode mixture layer in contact with the negative electrode current collector to the n-1^{th} negative electrode mixture layer spaced farthest from the negative electrode current collector.

In one example, the second negative electrode active material may be included in the first negative electrode mixture layer in an amount of 1 to 45 wt% based on the total weight of the second negative electrode active material, and in the second negative electrode mixture layer in an amount of 55 to 99 wt% based on the total weight.

In another example, the second negative electrode active material may be included in the first negative electrode mixture layer in an amount of 1 to 10 wt% based on the total weight of the second negative electrode active material, may be included in the second negative electrode mixture layer in an amount of 10 to 40 wt% based on the total weight, and may be included in the third negative electrode mixture layer in an amount of 40 to 89 wt% based on the total weight.

In yet another example, the second negative electrode active material may be included in the first negative electrode mixture layer at 1 to 5 wt%, based on a total weight of the second negative electrode active material, in the second negative electrode mixture layer at 5 to 15 wt% based on the total weight, in the third negative electrode mixture layer at 15 to 30 wt% based on the total weight, and in the fourth negative electrode mixture layer at 30 to 79 wt% based on the total weight.

The first negative electrode active material includes a carbon-based material and is characterized by excellent electrical properties such as electrical conductivity. However, when a short-circuit current flows inside the secondary battery, such as when a short-circuit occurs inside the secondary battery due to the penetration of a needle-shaped object, the carbon-based material with high electrical conductivity increases the amount of short-circuit current between the positive and negative electrodes. As a result, short circuit heat is significantly generated inside the secondary battery, which may accelerate the exothermic reaction of the secondary battery. However, the present invention is capable of reducing the amount of short-circuit current in the event of an internal short circuit of the secondary battery by having i) a separate mixture layer including a second negative electrode active material containing a silicon-based material as the outermost layer of the negative electrode mixture layer, i.e., the n^{th} negative electrode mixture layer, and at the same time, by ii) increasing the concentration of the second negative electrode active material containing a silicon-based material having a relatively lower electrical conductivity than a carbon-based material from the innermost to the outermost side of the negative electrode mixture layer, that is, from the first negative electrode mixture layer to the n-1^{th}negative electrode mixture layer. By doing so, the secondary battery has the advantage of reducing and/or delaying heat generation.

In addition, the second negative electrode active material may exhibit a tendency for the sphericity of the active material to decrease as it progresses from the first negative electrode mixture layer to the n^{th} negative electrode mixture layer. Here, "sphericity" may mean the ratio of the shortest diameter (short diameter) to the longest diameter (long diameter) of any diameter passing through the center of the particle, and a sphericity of 1 means that the shape of the particle is spherical. The sphericity may be measured by a particle shape analyzer.

Specifically, the second negative electrode active material may have the sphericity of 0.5 to 1.0, wherein the sphericity decreases as one progresses from the first negative electrode mixture layer to the n^{th}negative electrode mixture layer, resulting in a constant sphericity gradient.

In one example, the second negative electrode active material included in the first negative electrode mixture layer may have the sphericity of 0.8 to 1.0, and the second negative electrode active material included in the second negative electrode mixture layer may have a sphericity of 0.5 to 0.7.

In another example, the second negative electrode active material included in the first negative electrode mixture layer may have the sphericity of 0.9 to 1.0, the second negative electrode active material included in the second negative electrode mixture layer may have a sphericity of 0.7 to 0.8, and the second negative electrode active material included in the third negative electrode mixture layer may have the sphericity of 0.5 to 0.6.

By controlling the sphericity of the second negative electrode active material to have a constant gradient depending on the position of the negative electrode mixture layer including the second negative electrode active material, the present invention may reduce the electrical conductivity on the surface of the negative electrode mixture layer abutting the separator without reducing the energy density of the negative electrode mixture layer.

Furthermore, a total thickness of the negative electrode mixture layer is not particularly limited, but may be from 50 µm to 300 µm, and more particularly from 100 µm to 200 µm; 80 µm to 150 µm; 120 µm to 170 µm; 150 µm to 300 µm; 200 µm to 300 µm; or 150 µm to 190 µm.

Furthermore, the n^{th} negative electrode mixture layer, which is located at the outermost part of the individual negative electrode mixture layers including the negative electrode mixture layer and contacts the separator, may have a thickness adjusted to a certain range. Specifically, the thickness of the n^{th} negative electrode mixture layer may be 5% to 30% of the total thickness of the negative electrode mixture layer, more specifically, 5% to 20%; 5% to 15%; 5% to 10%; or 10% to 15% of the total thickness of the negative electrode mixture layer.

By adjusting the total thickness and individual thickness of the negative electrode mixture layer to the above range, the present invention may reduce the electrical conductivity on the negative electrode surface during normal operation of the secondary battery. Accordingly, the negative electrode of the present invention may not only prevent the energy density of the electrode from being reduced, but may also implement a resistance sufficient to reduce the flow of current on the negative electrode surface in the event of an internal short circuit of the secondary battery.

Meanwhile, the negative electrode mixture layer may include a binder to enable adhesion to the negative electrode current collector while also allowing the negative electrode active material, conductive material, and other additives to be bonded to each other. These binders include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, and regenerated cellulose, polyvinylpyrrolidone, polytetrafluoroethylene, polyethylene, polypropylene, ethylenepropylene-diene polymer (EPDM), sulfonated-EPDM, styrene butadiene rubber (SBR), fluorinated rubber, or various copolymers thereof, any one of which may be used alone or a mixture of two or more. The binder may be included from 1 to 10 wt% based on the weight of the negative electrode mixture layer, more particularly from 2 to 8 wt%; or from 1 to 5 wt%.

In addition, the negative electrode may include a negative electrode current collector having a high conductivity without causing chemical changes in the battery. For example, copper, stainless steel, nickel, titanium, calcined carbon, and the like can be used as the negative electrode current collector, and in the case of copper or stainless steel, those surface-treated with carbon, nickel, titanium, silver, and the like can also be used. In addition, the negative electrode current collector, like the positive electrode current collector, may be formed with fine irregularities on its surface to strengthen the coupling force with the negative electrode active material, and may be in various forms such as a film, sheet, foil, net, porous material, foam, non-woven material, etc. Furthermore, the average thickness of the negative electrode current collector may be suitably applied from 3 µm to 500 µm, considering the conductivity and total thickness of the negative electrode to be manufactured.

### Lithium Secondary Battery

Furthermore, in an exemplary embodiment, the present invention provides a lithium secondary battery comprising the above-described negative electrode according to the present invention, a positive electrode, and a separator positioned between the negative electrode and positive electrode.

The lithium secondary battery according to the invention includes, as shown in FIG. 2, an electrode assembly including a positive electrode 20, a negative electrode 10 according to the present invention and a separator 30 positioned between the positive electrode and negative electrode, and has a structure in which the electrode assembly is inserted into a battery case and sealed after being injected with an electrolyte composition.

Here, the negative electrode contains a silicon-based material as the negative electrode active material, which has a high energy density, and by having an individual mixture layer composed of a silicon-based material with a relatively low electrical conductivity at the outermost part of the multilayer structure of the negative electrode mixture layer, it may be possible to reduce the amount of current in the event of an internal short circuit, thereby reducing the amount of heat generation, which has the advantage of improving safety issues due to an internal short circuit of the secondary battery.

If the negative electrode has the same composition as the negative electrode of the present invention described above, the specific description will be omitted hereinafter.

In addition, the positive electrode includes a positive electrode mixture layer prepared by applying, drying, and pressing a slurry including a positive electrode active material onto the positive electrode current collector, and the slurry may optionally further include a conductive material, a binder, other additives, and the like as required.

Here, the positive electrode includes a multilayer structure of positive electrode mixture layers with two or more separate mixture layers stacked on a positive electrode current collector. Specifically, referring to FIG. 2, the positive electrode 20 may include m (wherein m≥2)positive electrode mixture layers 22 positioned on the positive electrode current collector 21, wherein the first positive electrode mixture layer 221a to the m^{th}positive electrode mixture layer 221m may include a first positive electrode active material including a lithium complex metal oxide represented by Formula 1 and a second positive electrode active material including an iron phosphate compound represented by Formula 2 below:

[Formula 1] Liₓ[Ni_{y}Co_{z}Mn_{w}M¹ᵥ]O₂

[Formula 2] LiFeₐM²₁₋ₐXO₄

In Formula 1 and Formula 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, and 0≤v≤0.1, respectively, where y+z+w+v=1,
M² is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more selected from the group consisting of P, Si, S, As, and Sb, and
a is 0≤a≤0.5.

Specifically, the positive electrode mixture layer has a structure in which m (but m≥2)individual positive electrode mixture layers are stacked on the positive electrode current collector. In this case, the positive electrode mixture layer stacked on the surface contacting the positive electrode current collector is the first positive electrode mixture layer, and the second positive electrode mixture layer to the m^{th} positive electrode mixture layer is sequentially stacked on the first positive electrode mixture layer, so that m individual positive electrode mixture layers are located on the positive electrode current collector.

The positive electrode mixture layer may have a structure of two or more layers (however, m≥2), and the number of layers is not particularly limited, but may specifically be two to ten layers; two to eight layers; two to six layers; or two to four layers. By adjusting the number of layers of the positive electrode mixture layer to the above range, the present invention may improve the energy density of the electrode while preventing a decrease in the manufacturing efficiency of the positive electrode, and at the same time effectively discharge the heat generated during charging and discharging of the battery to the outside.

In addition, the positive electrode mixture layer is prepared by applying, drying, and pressurizing a slurry containing a positive electrode active material capable of reversibly intercalating and deintercalating lithium ions during charging and discharging of the battery, wherein the positive electrode active material may include different types in each layer.

Specifically, the positive electrode according to the present invention has a configuration including a first positive electrode active material comprising a lithium complex metal oxide represented by Formula 1 below in a positive electrode mixture layer, and further including a second positive electrode active material including an iron phosphate compound represented by Formula 2 in a positive electrode mixture layer spaced apart from the positive electrode current collector, namely the second positive electrode mixture layer to the m^{th} positive electrode mixture layer positioned on the first positive electrode mixture layer:

[Formula 1] Liₓ[Ni_{y}Co_{z}Mn_{w}M¹ᵥ]O₂

[Formula 2] LiFeₐM²₁₋ₐXO₄

In Formula 1 and Formula 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, and 0≤v≤0.1, respectively, where y+z+w+v=1,
M² is one or more elements selected from the group consisting of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more selected from the group consisting of P, Si, S, As, and Sb, and
a is 0≤a≤0.5.

Lithium complex metal oxide, represented by Formula 1, is a ternary lithium oxide having nickel (Ni), cobalt (Co), and manganese (Mn) as main components, and in the aspect of performance such as battery output, has the advantage of being suitable for medium and large size secondary batteries in transportation fields such as electric vehicles (EVs) and power storage applications such as energy storage systems (ESSs) due to its high energy density. However, lithium complex metal oxide has a problem that its capacity increases as the content of nickel (Ni) increases, but it exhibits low chemical and structural stability, so exothermic reactions are prone to occur, and there is a high probability of ignition.

The exothermic reaction can be induced when a short-circuit current flows inside the cell, i.e., when an internal short-circuit occurs. In general, a short-circuit current in the cell may occur inside the secondary battery due to the penetration of a needle-shaped object, or a short-circuit may occur in an electronic device connected to the secondary battery.

Accordingly, the present invention includes a lithium complex metal oxide represented by Formula 1 throughout a multi-layered positive electrode mixture layer as a first positive electrode active material, and further includes an iron phosphate compound represented by Formula 2 in a second positive electrode mixture layer spaced apart from the positive electrode current collector as a second positive electrode active material, so that the first positive electrode active material that generates heat during charging and discharging of the battery may be distributed in a position adjacent to the positive electrode current collector that facilitates heat transfer to the outside. Thus, the present invention may improve the heat resistance of the positive electrode. Furthermore, the second positive electrode active material shrinks in volume as the lithium inside it escapes at an overcharge voltage of about 4.5V or more. As a result, the conductive path inside the positive electrode mixture layer including the second positive electrode active material may be quickly blocked to implement an insulating effect. In addition, the second positive electrode active material has a relatively low electrical conductivity compared to the first positive electrode active material, which may prevent an increase in the amount of short-circuit current at the surface of the positive electrode mixture layer in the event of an internal short circuit, thereby suppressing the generation of short-circuit heat. Furthermore, the second positive electrode active material may increase the rigidity of the positive electrode surface, thereby reducing the risk of an internal short circuit caused by external forces or penetration of a needle-shaped object.

In this case, the first negative electrode active material including the lithium complex metal oxide represented by Formula 1 is a metal oxide including nickel (Ni), cobalt (Co), and manganese (Mn) along with lithium, which in some cases may be doped with other transition metals (M¹). In specific examples, more specifically, the lithium complex metal oxides may include one or more selected from the group consisting of Li(Ni_{0.6}Co_{0.2}Mn_{0.2})O₂, Li(Ni_{0.7}Co_{0.15}Mn_{0.15})O₂, Li(Ni_{0.8}Co_{0.1}Mn_{0.1})O₂, Li(Ni_{0.9}Co_{0.05}Mn_{0.05})O₂, Li(Ni_{0.6}Co_{0.2}Mn_{0.1}Zr_{0.1})O₂, Li(Ni_{0.6}Co_{0.2}Mn_{0.15}Zr_{0.05})O₂, and Li(Ni_{0.7}Co_{0.1}Mn_{0.1}Zr_{0.1})O₂.

Although the particle size is not particularly limited, the first negative electrode active material may have an average particle size of 0.5 to 5 *µ*m, and more specifically may have an average particle size of 0.8 to 1.5 *µ*m; 1.0 to 3.0 *µ*m; 1.2 to 1.8 *µ*m; or 1.5 to 2.5 *µ*m.

Furthermore, the iron phosphate compounds represented by Formula 2 are lithium phosphates containing iron, which in some cases may be doped with other transition metals (M²). For example, such iron phosphate compounds may include LiFePO₄, LiFe_{0.8}Mn_{0.2}PO₄, LiFe_{0.5}Mn_{0.5}PO₄, and the like.

The second negative electrode active material including the iron phosphate compound may have an average particle size of 0.5 µm to 5 µm, and more specifically may have an average particle size of 0.5 µm to 1.0 µm; 0.8 µm to 1.2 µm; 1.0 µm to 2.0 µm; 1.5 µm to 3.0 µm; 2.0 µm to 3.0 µm; or 2.5 µm to 4.0 µm.

Furthermore, the second positive electrode active material may exhibit a tendency for the average particle size of the second positive electrode active material contained in each positive electrode mixture layer to increase as the position of the individual positive electrode mixture layer changes from the second positive electrode mixture layer to the m^{th} positive electrode mixture layer.

Specifically, the second positive electrode active material included in the second positive electrode mixture layer may have an average particle size of 0.5 to 1.2 µm, and the second positive electrode active material included in the m^{th} positive electrode mixture layer (where m≥2)may have an average particle size of 1.3 µm to 3.0 µm.

In one example, the second positive electrode active material included in the second positive electrode mixture layer may have an average particle size of 0.8 to 1.0 µm, and the second positive electrode active material included in the third positive electrode mixture layer may have an average particle size of 1.2 µm to 1.5 µm.

In another example, the second positive electrode active material included in the second positive electrode mixture layer may have an average particle size of 0.6 to 0.8 µm, the second positive electrode active material included in the third positive electrode mixture layer may have an average particle size of 1.5 µm to 1.8 µm, and the second positive electrode active material included in the fourth positive electrode mixture layer may have an average particle size of 2.0 µm to 2.2 µm.

The positive electrode of the present invention may further increase the rigidity of the positive electrode surface by letting the average particle size of the second positive electrode active material to increase as the position of the individual positive electrode mixture layers changes from the second positive electrode mixture layer to the m^{th} positive electrode mixture layer.

In addition, the second positive electrode active material may be included in less than 10 wt% with respect to the weight of the total positive electrode mixture layer, more specifically, 0.1 to 9.9 wt% with respect to the weight of the positive electrode mixture layer; 0.5 to 8.0 wt%; 0.5 to 6.0 wt%; 0.1 to 5.0 wt%; 0.1 to 3.0 wt%; 1.0 to 3.0 wt%; 2.5 to 5.0 wt%; 4.0 to 8.0 wt%; or 6.0 to 9.9 wt%.

Moreover, the second positive electrode active material including an iron phosphate compound represented by Formula 2 may be included in the individual positive electrode mixture layers in an amount of 0.5 to 20 wt%, based on the weight of each positive electrode mixture layer, and more particularly may be included in an amount of 1 to 18 wt%; 1 to 15 wt%; 1 to 12 wt%; 1 to 10 wt%; 1 to 8 wt%; 1 to 5 wt%; 0.5 to 1 wt%; 0.5 to 5 wt%; 2 to 6 wt%; 0.5 to 0.9 wt%; 5 to 16 wt%; 7 to 15 wt%; or 8 to 12 wt% based on the weight of each positive electrode mixture layer.

By controlling the content of the second positive electrode active material with respect to the weight of the total positive electrode mixture layer and the individual positive electrode mixture layer to the range as described above, the present invention may prevent the rigidity of the positive electrode surface from not being sufficiently implemented due to an insignificant content, while preventing the electrode resistance of the positive electrode surface from increasing due to an excessive amount of the second positive electrode active material, thereby reducing the electrical performance of the battery.

Furthermore, the second positive electrode active material may be included in the second positive electrode mixture layer to the m^{th} positive electrode mixture layer, but may have a tendency to increase in content within the individual positive electrode mixture layers or in the ratio of the content with respect to the weight of the individual positive electrode mixture layers as the position changes from the second positive electrode mixture layer abutting the first positive electrode mixture layer to the m^{th} positive electrode mixture layer farthest from the first positive electrode mixture layer.

Since the second positive electrode active material undergoes a relatively slower redox reaction compared to the first positive electrode active material in the event of a battery overheating or short circuit, it has the advantage of reducing the likelihood of fire or explosion in the event of an internal short circuit in the battery by being concentrated as it becomes closer to the outermost surface of the positive electrode mixture layer.

Meanwhile, the positive electrode for a lithium secondary battery according to the present invention may further include a conductive material, a binder, other additives, etc. in the positive electrode mixture layer as required.

In this case, the first and second positive electrode active materials contained in each positive electrode mixture layer may be included in at least 85 wt%, and more specifically at least 90 wt%, at least 93 wt%, or at least 95 wt%, based on the total weight of each positive electrode mixture layer.

In addition, the conductive material used to improve the electrical performance of the positive electrode may be any material conventionally used in the art, but more particularly may include one or more species selected from the group consisting of natural graphite, artificial graphite, carbon black, acetylene black, denka black, ketjen black, super-P, channel black, furnace black, lamp black, summer black, graphene, and carbon nanotubes.

Furthermore, the conductive material may be included to be 0.1 to 5wt% based on the total weight of each positive electrode mixture layer, more specifically may be included to be 0.1 to 4wt%; 2 to 4wt%; 1.5 to 5wt%; 1 to 3wt%; 0.1 to 2wt%; or 0.1 to 1wt%.

Furthermore, the binder serves to cause the positive electrode active material, positive electrode additive, and conductive material to be bonded together, and may be used without being particularly limited as long as it has this function. Specifically, the binder may include one or more resins selected from the group consisting of polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in an amount of 1 to 10wt% based on the total weight of each positive electrode mixture layer, more particularly may be included in an amount of 2 to 8wt%; or 1 to 5wt%.

Furthermore, the total thickness of the positive electrode mixture layer is not particularly limited, but may be from 50 µm to 300 µm, and more particularly from 100 µm to 200 µm; 80 µm to 150 µm; 120 µm to 170 µm; 150 µm to 300 µm; 200 µm to 300 µm; or 150 µm to 190 µm.

In addition, among the individual positive electrode mixture layers comprising the positive electrode mixture layer, the first positive electrode mixture layer in contact with the positive electrode current collector may have a thickness that is adjusted to a certain range. Specifically, the thickness of the first positive electrode mixture layer may be 10% to 60% of the total thickness of the positive electrode mixture layer, more specifically, 10% to 40%; 30% to 50%; 10% to 20%; or 40% to 60% of the total thickness of the positive electrode mixture layer.

By adjusting the total thickness and individual thickness of the positive electrode mixture layer to the above range, the present invention may not only prevent the energy density of the electrode from being reduced, but also implement a high adhesion between the positive electrode current collector and the positive electrode mixture layer.

Furthermore, as the positive electrode current collector provided in the above positive electrode, one having a high conductivity and does not cause a chemical change in the battery may be used. For example, stainless steel, aluminum, nickel, titanium, calcined carbon, and the like may be used, and in the case of aluminum or stainless steel, those that are surface-treated with carbon, nickel, titanium, silver, and the like may be used.

Additionally, the average thickness of the current collector may be appropriately applied from 5 to 500 µm, considering the conductivity and total thickness of the positive electrode being manufactured.

Meanwhile, the separator is interposed between the positive electrode and the negative electrode, and an insulating thin film having high ionic permeability and mechanical strength is used. The separator is not particularly limited as long as it is those conventionally used in the art, but in particular, a sheet or nonwoven fabric made of polypropylene, glass fiber, or polyethylene, etc., that is chemically resistant and hydrophobic may be used, and in some cases, a composite separator in which inorganic particles/organic particles are coated by an organic binder polymer on a porous polymeric substrate such as the sheet or nonwoven fabric may be used. When a solid electrolyte such as a polymer is used as an electrolyte, the solid electrolyte may also serve as a separator. Furthermore, the average pore diameter of the above separator may be 0.01 to 10 µm, and the average thickness may be 5 to 300 µm.

Additionally, the electrolyte composition may include, but is not limited to, organic liquid electrolytes, inorganic liquid electrolytes, solid polymer electrolytes, gel-type polymer electrolytes, solid inorganic electrolytes, molten inorganic electrolytes, and the like that can be used in the manufacture of lithium secondary batteries.

Specifically, the electrolyte may include an organic solvent and a lithium salt.

The organic solvent can be used without any particular limitation as long as it can serve as a medium in which the ions involved in the electrochemical reaction of the battery can move. For example, the organic solvent may be an ester-based solvent such as methyl acetate, ethyl acetate, γ-butyrolactone, ε-caprolactone, etc; ether-based solvents, such as dibutyl ether or tetrahydrofuran; ketone-based solvents such as cyclohexanone, etc.; aromatic hydrocarbon-based solvents such as benzene, fluorobenzene, etc.; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC), etc.; alcohol-based solvents such as ethyl alcohol, isopropyl alcohol, etc.; nitrile groups such as R-CN (where R is a straight, branched, or cyclic hydrocarbon group from C2 to C20, and may include a double bond aromatic ring or ether bond); amide groups such as dimethylformamide; dioxolane groups such as 1,3-dioxolane; or sulfolane groups. Among these, a carbonate-based solvent is preferred, and a mixture of a cyclic carbonate (e.g., ethylene carbonate or propylene carbonate, etc.) having a high ionic conductivity and high dielectric constant that may increase the charge and discharge performance of the battery and a linear carbonate-based compound (e.g., ethyl methyl carbonate, dimethyl carbonate, or diethyl carbonate, etc.) having a low viscosity is more preferred. In this case, a mixture of cyclic carbonate and chained carbonate in a volume ratio of about 1: 1 to 9 may result in a superior performance of the electrolyte.

Furthermore, the lithium salts may be used without particular limitation as long as they are compounds capable of providing lithium ions for use in lithium secondary batteries. Specifically, the lithium salts may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂.

Furthermore, the concentration of the lithium salt may be used in the range of 0.1 M to 2.0 M. When the concentration of the lithium salt is included in the above range, the electrolyte has a suitable conductivity and viscosity, so that it can exhibit excellent electrolyte performance, and the lithium ions may be effectively transported.

In addition to the above electrolyte components, the electrolyte may also contain, for example, haloalkylene carbonate-based compounds, such as difluoroethylene carbonate, for the purpose of improving the life characteristics of the battery, inhibiting the reduction of the battery capacity, improving the discharge capacity of the battery, etc.; or one or more additives selected from the group consisting of pyridine, triethylphosphite, triethanolamine, cyclic ether, ethylenediamine, N-glyme, hexaphosphate triamide, nitrobenzene derivative, sulfur, quinone imine dye, N-substituted oxazolidinone, N,N-substituted imidazolidine, ethylene glycol dialkyl ether, ammonium salt, pyrrole, 2-methoxyethanol, or aluminum trichloride may be included. Here, the additives may be included to be from 0.1 wt% to 5 wt% with respect to the total weight of the electrolyte.

As described above, lithium secondary batteries including the positive electrode active material composition according to the present invention, or positive electrode prepared using the composition, may exhibit excellent discharge capacity, output characteristics, and capacity retention rates, and are therefore useful in portable devices such as mobile phones, laptops, digital cameras, and electric vehicles such as hybrid electric vehicles (HEVs).

Furthermore, the lithium secondary battery according to the present invention is not limited in appearance, depending on the intended use of the battery, and may be shaped by a case conventionally used in the art. For example, the lithium secondary battery may be a battery including a cylindrical or prismatic, pouch-type or coin-shaped battery case using a can.

In one example, the lithium secondary battery may be a prismatic secondary battery including a prismatic can as the battery case.

### Secondary Battery Module

Furthermore, the present invention provides, in one embodiment, a secondary battery module including a lithium secondary battery according to the present invention described above.

The secondary battery module according to the present invention includes the lithium secondary battery of the present invention described above as a unit cell, which not only has excellent electrical performance, but also has excellent safety from internal short circuit, so that it may be used as a power source for medium to large-sized devices requiring high temperature stability, long cycle characteristics, high rate characteristics, and the like.

Specific examples of such medium and large devices include power tools powered by an electric motor; electric vehicles, including electric vehicles (EVs), hybrid electric vehicles (HEVs), and plug-in hybrid electric vehicles (PHEVs); electric two-wheeled vehicles including electric bicycles (E-bikes) and electric scooters (Escooters); electric golf carts; and power storage systems. More specifically, hybrid electric vehicles (HEVs) may be included, but it is not limited thereto.

Hereinafter, the present invention will be described in more detail by way of examples and experimental examples.

However, the following examples and experimental examples are only illustrative of the present invention, and the present invention is not limited to the following examples.

### Examples 1-10 and Comparative Examples 1-4. Preparation of Lithium

### Secondary Batteries

### a) Negative Electrode Preparation

Water was injected into a homo mixer, and a carbon-based material in which natural graphite and artificial graphite are mixed in a weight ratio of 1:1 as the first negative electrode active material; SiO_{q} (where 0.9≤q≤2.2) as the second negative electrode active material; and styrene butadiene rubber (SBR) were added, respectively. Then, the slurry for forming the first negative electrode mixture layer, the slurry for forming the second negative electrode mixture layer, and the slurry for forming the third negative electrode mixture layer were prepared by mixing at 2500 rpm for 80 minutes.

Here, the slurry prepared to form each negative electrode mixture layer was prepared to contain 98.5 wt% negative electrode active material and 1.5 wt% binder on a solids basis. In addition, based on ① the sphericity of the second negative electrode active material (SiO_{q}) and ② based on the total 150 parts by weight of the negative electrode active material, the ratio of the content of the first and second negative electrode active materials in each slurry (unit: parts by weight) were adjusted as shown in Table 1.

A copper thin plate (average thickness: 12 *µ*m) was prepared as the negative electrode current collector, and the slurry for forming the first to third negative electrode mixture layers prepared earlier was sequentially cast on the prepared copper thin plate. The slurry-cast copper thin plate was dried in a 130°C vacuum oven and then rolled to form the negative electrode. At this time, the total thickness of the rolled negative electrode mixture layer was 140 µm, and the thickness of the individual positive electrode mixture layers was adjusted to be the same.

**Table 1**

| | Numb er of layers | First negative electrode mixture layer | | | Second negative electrode mixture layer | | | Third negative electrode mixture layer | | |
|---|---|---|---|---|---|---|---|---|---|---|
| | | Graphit e content | SiO_{q} conte nt | sphericit y | Graphit e content | SiO_{q} conte nt | sphericit y | Graphit e content | SiO_{q} conte nt | sphericit y |
| Negativ e electro de structur e 1 | 2 | 70 | 5 | 0.9 | 0 | 70 | 0.75 | - | - | - |
| Negativ e electro de structur e 2 | 3 | 49.7 | 0.3 | 0.9 | 49.5 | 0.5 | 0.75 | 0 | 50 | 0.6 |
| Negativ e electro de structur e 3 | 3 | 47 | 3 | 0.9 | 45 | 5 | 0.75 | 0 | 50 | 0.6 |
| Negativ e electro de structur e 4 | 3 | 44 | 6 | 0.9 | 40 | 10 | 0.75 | 0 | 50 | 0.6 |
| Negativ e electro de structur e 5 | 3 | 41 | 9 | 0.9 | 35 | 15 | 0.75 | 0 | 50 | 0.6 |
| Negativ e electro de structur e 6 | 3 | 47 | 3 | 0.9 | 45 | 5 | 0.9 | 0 | 50 | 0.9 |
| Negativ e electro de structur e 7 | 1 | 150 | - | - | - | - | - | - | - | - |
| Negativ e electro de structur e 8 | 1 | 135 | 15 | 0.9 | - | - | - | - | - | - |
| Negativ e | 2 | 70 | 5 | 0.9 | 65 | 10 | 0.75 | - | - | - |
| electro de structur e 9 | | | | | | | | | | |

### b) Positive Electrode Preparation

N-methyl pyrrolidone solvent was injected into the homo mixer, and LiNi_{0.8}Co_{0.1}Mn_{0.1}O₂ (hereinafter referred to as "NCM", average particle size: about 2 µm) as the first positive electrode active material, LiFePO₄(hereinafter referred to as "LFP") as the second positive electrode active material, carbon black as a conductive material, and polyvinylidene fluoride (PVdF) as a binder were added, respectively. Then, the slurry for forming the first positive electrode mixture layer, the slurry for forming the second positive electrode mixture layer, and the slurry for forming the third positive electrode mixture layer were prepared by mixing at 3,000 rpm for 60 minutes.

The slurry prepared to form each positive electrode mixture layer was prepared to contain 97 wt% of the positive electrode active material, 2 wt% of the conductive material, and 1 wt% of the binder on a solids basis. In addition, based on ① the average particle size (unit: *µ*m) of the second positive electrode active material and ② based on the total 150 parts by weight of the positive electrode active material, the ratio of the content (unit: parts by weight) of the first to third positive electrode active material in each slurry were adjusted as shown in Table 2.

An aluminum thin plate (average thickness: 14 *µ*m) was prepared as the positive electrode current collector, and the slurry for forming the first to third positive electrode mixture layers prepared earlier was sequentially cast on the prepared aluminum thin plate, dried in a 130°C vacuum oven, and then rolled to prepare the positive electrode. The total thickness of the rolled positive electrode mixture layer was 150 µm, and the thickness of the individual positive electrode mixture layers was adjusted to be the same.

**[Table 2]**

| | Number of layers | First positive electrode mixture layer | Second positive electrode mixture layer | | | Third positive electrode mixture layer | | |
|---|---|---|---|---|---|---|---|---|
| | | NCM content | NCM content | LFP content | LFP Particle size | NCM content | LFP content | LFP Particle size |
| Positive electrode structure 1 | 2 | 75 | 67.5 | 7.5 | 1.5 | - | - | - |
| Positive electrode structure 2 | 3 | 50 | 47.5 | 2.5 | 0.8 | 45 | 5 | 1.5 |
| Positive electrode structure 3 | 3 | 50 | 42.5 | 7.5 | 0.8 | 35 | 15 | 1.5 |
| Positive electrode structure 4 | 3 | 50 | 47.5 | 2.5 | 1.5 | 45 | 5 | 1.5 |
| Positive electrode structure 5 | 1 | 150 | - | | - | - | - | - |

### c) Assembly of the Secondary Battery

As shown in Table 3 below, the electrode assemblies were manufactured by opposing the previously prepared positive electrode and negative electrode, respectively, and interposing an 18 µm polypropylene separator between them. Each manufactured electrode assembly was inserted into a prismatic cell case, an electrolyte composition was injected into the cell case, and the case was sealed to manufacture a prismatic lithium secondary battery. Here, as the electrolyte composition, a solution in which lithium hexafluorophosphate (LiPF6, 1.0 M), and vinyl carbonate (VC, 2 wt%) are mixed in a mixture of ethylene carbonate (EC):dimethyl carbonate (DMC):diethyl carbonate (DEC) = 1: 1: 1 (volume ratio) was used.

**[Table 3]**

| | Negative electrode structure | Positive electrode structure |
|---|---|---|
| Example 1 | Structure 1 | Structure 2 |
| Example 2 | Structure 2 | Structure 2 |
| Example 3 | Structure 3 | Structure 2 |
| Example 4 | Structure 4 | Structure 2 |
| Example 5 | Structure 5 | Structure 2 |
| Example 6 | Structure 6 | Structure 2 |
| Example 7 | Structure 3 | Structure 1 |
| Example 8 | Structure 3 | Structure 3 |
| Example 9 | Structure 3 | Structure 4 |
| Example 10 | Structure 3 | Structure 5 |
| Comparative Example 1 | Structure 7 | Structure 2 |
| Comparative Example 2 | Structure 7 | Structure 5 |
| Comparative Example 3 | Structure 8 | Structure 2 |
| Comparative Example 4 | Structure 8 | Structure 5 |
| Comparative Example 5 | Structure 9 | Structure 2 |
| Comparative Example 6 | Structure 9 | Structure 5 |

### Experimental Example.

To evaluate the performance and safety of the lithium secondary battery according to the present invention, the following experiments were performed.

### A) Evaluation of secondary battery output

The lithium secondary batteries prepared in the Example and Comparative Examples, respectively, were charged at a 0.1C-rate at room temperature (22°C). Then, the initial discharge capacity was measured by discharging the fully charged lithium secondary batteries at a rate of 0. 1C. After that, each lithium secondary battery was again charged at 0.1C-rate and discharged at 1.0C, 2.0C, 5.0C, and 9.0C rates to measure the relative discharge capacity ratio based on the initial discharge capacity by discharge rate, and the results are shown in Table 4 below.

### B) Evaluation of nail penetration test

The lithium secondary batteries manufactured in the Example and Comparative Examples were subjected to two charge and discharge cycles with a current value of 0.5C in a voltage range of 4.2 to 2.0V at an environment of 25°C. Then, after charging the batteries to 4.2 V, each lithium secondary battery was evaluated whether ignition occurs when a 3 mm diameter metal object was dropped through the cell at 80 mm/sec under the same PV8450 certification conditions, and the results are shown in Table 5.

### C) Evaluation of impact test

Each lithium secondary batteries manufactured in the Example and Comparative Examples were fully charged at a 0.1C-rate at room temperature (22°C). Then, a secondary battery impact test according to the UN1642DL impact certification standard was performed on the fully charged lithium secondary batteries. Here, weight used was 9 kg, and the test was performed by dropping the weight on a 16 mm diameter round bar placed on the secondary battery cell. The results are shown in Table 5 below.

**[Table 4]**

| | Ratio of relative discharge capacity to C rate discharge capacity [%] | | | |
|---|---|---|---|---|
| | 1.0C | 2.0C | 5.0C | 9.0C |
| Example 1 | 99.2 | 97.9 | 90.5 | 80.5 |
| Example 2 | 99.0 | 97.7 | 89.3 | 80.1 |
| Example 3 | 99.4 | 98.5 | 91.4 | 81.4 |
| Example 4 | 99.5 | 98.3 | 91.8 | 81.6 |
| Example 5 | 99.7 | 98.4 | 92.3 | 82.4 |
| Example 6 | 99.3 | 98.1 | 91.0 | 80.7 |
| Example 7 | 99.2 | 97.8 | 89.9 | 79.8 |
| Example 8 | 99.6 | 97.6 | 89.7 | 79.5 |
| Example 9 | 99.2 | 97.9 | 90.1 | 80.2 |
| Example 10 | 99.9 | 96.2 | 91.8 | 83.4 |
| Comparative Example 1 | 99.0 | 95.2 | 85.5 | 72.9 |
| Comparative Example 2 | 99.1 | 95.9 | 86.7 | 79.5 |
| Comparative Example 3 | 99.2 | 95.1 | 88.1 | 78.7 |
| Comparative Example 4 | 99.4 | 96.3 | 88.1 | 80.1 |
| Comparative Example 5 | 99.1 | 96.2 | 89.5 | 77.4 |
| Comparative Example 6 | 99.3 | 97.7 | 89.7 | 80.2 |

**Table 5**

| | Whether ignition occurs during nail penetration (Pass/Test) | Impact test | |
|---|---|---|---|
| | | Average press width of round bar | Whether ignition occurred |
| Example 1 | 5P/6T | 5.3mm | X |
| Example 2 | 6P/6T | 5.6mm | X |
| Example 3 | 6P/6T | 4.5mm | X |
| Example 4 | 6P/6T | 4.8mm | X |
| Example 5 | 6P/6T | 4.3mm | X |
| Example 6 | 6P/6T | 5.2mm | X |
| Example 7 | 5P/6T | 5.1mm | X |
| Example 8 | 6P/6T | 4.7mm | X |
| Example 9 | 6P/6T | 5.4mm | X |
| Example 10 | 6P/6T | 8.1mm | X |
| Comparative Example 1 | 3P/6T | 9.9mm | X |
| Comparative Example 2 | 0P/6T | 16.6mm | O |
| Comparative Example 3 | 3P/6T | 8.7mm | X |
| Comparative Example 4 | 1P/6T | 12.8mm | O |
| Comparative Example 5 | 4P/6T | 8.2mm | X |
| Comparative Example 6 | 3P/6T | 10.9mm | O |

As shown in Table 4 and Table 5, it can be seen that the positive electrode for a lithium secondary battery according to the present invention not only has a high energy density, but also has a good effect of improving the safety of the battery.

Specifically, the secondary batteries of the examples according to the present invention showed that the discharge capacity ratio was maintained above 89% even when discharged at a high rate of 5.0C rate or higher. This indicates that the output of the lithium secondary battery including the positive electrode of the examples is excellent.

Furthermore, it was confirmed that the secondary battery of the examples did not ignite during the nail penetration test and the impact test. This indicates that the safety of the secondary battery according to the present invention is high.

From these results, it can be seen that the lithium secondary battery according to the present invention contains a ternary compound containing nickel (Ni), cobalt (Co), manganese (Mn), and the like, and at the same time contains a small amount of silicon-based oxide and iron phosphate compounds on the positive electrode and negative electrode, respectively, at the outermost part of the mixture layer adjacent to the separator, so that the energy density of the battery is not only excellent, but also the electrical conductivity of the positive electrode and negative electrode surfaces is relatively low, which can improve the safety in case of internal short circuit of the secondary battery.

While the foregoing has been described with reference to preferred examples of the present invention, it will be understood by those skilled in the art or having ordinary knowledge of the art that various modifications and changes can be made to the invention without departing from the field of thought and technology described in the patent claims that will follow.

Therefore, the technical scope of the invention is not limited to what is described in the detailed description of the specification, but may be determined by the claims of the patent.

### [Reference numerals]

1: LITHIUM SECONDARY BATTERY
10: NEGATIVE ELECTRODE
11: NEGATIVE ELECTRODE CURRENT COLLECTOR
12: MULTI-LAYERED NEGATIVE ELECTRODE MIXTURE LAYER
121: INDIVIDUAL NEGATIVE ELECTRODE MIXTURE LAYER
121a: FIRST NEGATIVE ELECTRODE MIXTURE LAYER
121n: NTH NEGATIVE ELECTRODE MIXTURE LAYER
20: POSITIVE ELECTRODE
21: POSITIVE ELECTRODE CURRENT COLLECTOR
22: MULTI-LAYERED POSITIVE ELECTRODE MIXTURE LAYER
221: INDIVIDUAL POSITIVE ELECTRODE MIXTURE LAYER
221a: FIRST POSITIVE ELECTRODE MIXTURE LAYER
221m: MTH POSITIVE ELECTRODE MIXTURE LAYER

## Claims

1. A negative electrode for a lithium secondary battery, the negative electrode comprising:
a negative electrode current collector, and
a first negative electrode mixture layer to a n^{th} negative electrode mixture layer (where n≥2) disposed at the negative electrode current collector,
wherein the first negative electrode mixture layer to n-1^{th} negative electrode mixture layer comprises a first negative electrode active material including a carbon-based material and a second negative electrode active material including a silicon-based material,
wherein the n^{th} negative electrode mixture layer comprises the second negative electrode active material including the silicon-based material.

2. The negative electrode for a lithium secondary battery of claim 1, wherein a content or a content ratio of the second negative electrode active material increases in respective negative electrode mixture layer of the first negative electrode mixture layer to the n-1^{th}negative electrode mixture layer positioned sequentially at the negative electrode current collector.

3. The negative electrode for a lithium secondary battery of claim 1, wherein the carbon-based material comprises one or more selected from a group comprising soft carbon, hard carbon, natural graphite, artificial graphite, expanded graphite, non-graphitizable carbon carbon black, acetylene black, ketjen black, carbon nanotubes, fullerene, activated carbon, graphene, and carbon fiber.

4. The negative electrode for a lithium secondary battery of claim 1, wherein the silicon-based material comprises one or more selected from a group comprising silicon (Si), silicon carbide (SiC), and silicon oxide (SiO_{q}, where 0.8≤q≤2.5).

5. The negative electrode for a lithium secondary battery of claim 1, wherein the second negative electrode active material is included in 1 to 20 wt% with respect to a total weight of negative electrode active material of a negative electrode mixture layer.

6. The negative electrode for a lithium secondary battery of claim 1, wherein the second negative electrode active material has a sphericity of 0.5 to 1.0, and the sphericity decreases in respective negative electrode mixture layer of the first negative electrode mixture layer to the n^{th} negative electrode mixture layer positioned sequentially at the negative electrode current collector.

7. The negative electrode for a lithium secondary battery of claim 1, wherein a total thickness of a negative electrode mixture layer is 50 µm to 300 µm.

8. The negative electrode for a lithium secondary battery of claim 1, wherein a thickness of the n^{th} negative electrode mixture layer is from 5% to 30% of a total thickness of a positive electrode mixture layer of the lithium secondary battery.

9. A lithium secondary battery comprising the negative electrode according to claim 1, a positive electrode, and a separator positioned between the negative electrode and positive electrode.

10. The lithium secondary battery of claim 9, wherein the positive electrode comprises a positive electrode current collector and a first positive electrode mixture layer to a m^{th} positive electrode mixture layer (where m≥2)disposed at the positive electrode current collector,
wherein the first positive electrode mixture layer to the m^{th} positive electrode mixture layer comprise a first positive electrode active material comprising a lithium complex metal oxide represented by Formula 1 and a second positive electrode active material comprising an iron phosphate compound represented by Formula 2:
[Formula 1] Liₓ[Ni_{y}Co_{z}Mn_{w}M¹ᵥ]O₂
[Formula 2] LiFeₐM²₁₋ₐXO₄
wherein, in Formula 1 and Formula 2,
M¹ is one or more elements selected from a group comprising W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0.1≤y<1, 0≤z≤1, 0≤w≤1, and 0≤v≤0.1, respectively, where y+z+w+v=1,
M² is one or more elements selected from a group comprising W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
X is one or more selected from the group consisting of P, Si, S, As, and Sb, and
a is 0≤a≤0.5.

11. The lithium secondary battery of claim 10, wherein a content or a content ratio of the second positive electrode active material in each positive electrode mixture layer increases in respective positive electrode mixture layer of the first positive electrode mixture layer to the m^{th} positive electrode mixture layer positioned sequentially at the positive electrode current collector.

12. The lithium secondary battery of claim 10, wherein the second positive electrode active material is included in less than 10 wt% with respect to a total weight of positive electrode active material of a positive electrode mixture layer.

13. The lithium secondary battery of claim 10, wherein a total thickness of a positive electrode mixture layer is 50 µm to 300 µm.

14. A secondary battery module comprising the lithium secondary battery according to claim 9.
